# EUROPÄISCHE PATENTSCHRIFT

(11) **EP 4 483 703 B1**
(45) Veröffentlichungstag und Bekanntmachung des Hinweises auf die Patenterteilung: **10.06.2026**
(21) Anmeldenummer: 24168628.6
(22) Anmeldetag: 05.04.2024
(51) Int. Cl.: A01D 43/08

(54) **ÜBERLADEVORRICHTUNG EINER LANDWIRTSCHAFTLICHEN ERNTEMASCHINE**
TRANSFER DEVICE OF AN AGRICULTURAL HARVESTER
DISPOSITIF DE TRANSBORDEMENT D'UNE MOISSONNEUSE AGRICOLE

(30) Priorität: 26.06.2023 DE 102023116780
(43) Veröffentlichungstag der Anmeldung: 01.01.2025
(73) Patentinhaber: CLAAS Saulgau GmbH, 88340 Bad Saulgau (DE)
(72) Erfinder: Löffler, Niklas, 88367 Hohentengen (DE); Steiner, Jens, 56269 Beckum (DE); Bauknecht, Benjamin, 88356 Ostrach (DE); Deufel, Tobias, 88605 Meßkirch-Menningen (DE)
(74) Vertreter: Budach, Steffen

(56) Entgegenhaltungen:
- EP-B1- 1 709 861
- DE-A1- 102007 037 710
- DE-A1- 102014 115 503
- DE-A1- 19 641 211

## Beschreibung

Die Erfindung betrifft eine Überladevorrichtung einer landwirtschaftlichen Erntemaschine. Des Weiteren betrifft die Erfindung eine landwirtschaftliche Erntemaschine.

DE 10 2007 037 710 A1 offenbart eine als Feldhäcksler ausgebildete landwirtschaftliche Erntemaschine mit einer Überladeeinrichtung. Die Überladeeinrichtung ist an einem ersten Ende bzw. an einem ersten Abschnitt über einen Drehpunkt gelenkig an der landwirtschaftlichen Erntemaschine befestigt. An einem gegenüberliegenden zweiten Ende oder zweiten Abschnitt verfügt die Überladevorrichtung über eine Auswurfklappe. Die Überladevorrichtung weist zwei Segmente auf, die in einem Überlappungsbereich miteinander verbunden sind. Die Segmente verfügen über einen U-förmig ausgebildeten Grundkörper mit Führungsflächen, die der Aufnahme eines Verschließblechs dienen.

DE 10 2014 115 503 A1 offenbart eine weitere landwirtschaftliche Erntemaschine mit einem Überladevorrichtung.

EP 1 709 861 B1 offenbart eine Überladevorrichtung nach dem Oberbegriff des Anspruchs 1.

Hiervon ausgehend liegt der vorliegenden Erfindung die Aufgabe zugrunde, eine neuartige Überladevorrichtung einer landwirtschaftlichen Erntemaschine zu schaffen, die bei geringem Gewicht im Betrieb auf dieselbe einwirkende Kräfte und Momente optimal aufnehmen kann.

Diese Aufgabe wird durch eine Überladevorrichtung einer landwirtschaftlichen Erntemaschine nach Patentanspruch 1 gelöst.

Erfindungsgemäß weist die Tragstruktur an einer Unterseite Profilrohre und an einer Oberseite Winkelschienen auf, wobei die Profilrohre und die Winkelschienen an dem oder benachbart zu dem ersten Ende oder ersten Abschnitt über weitere Profilrohre verbunden sind, und wobei die Profilrohre und die Winkelschienen an einem dem ersten Ende oder ersten Abschnitt gegenüberliegenden zweiten Ende oder zweiten Abschnitt über ein Kastenprofil verbunden sind, wobei das Kastenprofil an der Unterseite sich zwischen den Profilrohren erstreckende Bodenwände und sich zwischen jeweils einer Winkelschiene und einem Profilrohr ersteckende Seitenwände aufweist.

Die erfindungsgemäße Überladevorrichtung erlaubt es, bei geringem Gewicht auf dieselbe im Betrieb einwirkende Kräfte und Momente optimal aufzunehmen. Vorzugsweise bilden die an der Unterseite verlaufenden Profilrohre einen Druckbelastungsstrang und die an der Oberseite verlaufenden Winkelschienen einen Zugbelastungsstrang. Dies dient der optimalen Aufnahme von im Betrieb auf die Überladevorrichtung einwirkenden Kräften und Momenten bei geringem Gewicht. Vorzugsweise sind die an der Unterseite verlaufenden Profilrohre und/oder die weiteren Profilrohre Vierkantrohre. Die Vierkantrohre sind besonders bevorzugt, um bei geringem Gewicht im Betrieb wirkende Kräfte und Momente optimal aufzunehmen.

Vorzugsweise weist das Kastenprofil einen Flansch auf, der zur Anbindung einer Auswurfkrümmer-Verlängerung und/oder eines Auswurfkrümmer-Gelenks und/oder einer Auswurfklappe ausgebildet ist, wobei der Flansch mit jedem der Profilrohre, jeder der Winkelschienen und jeder der Seitenwände verschweißt ist. Dies erlaubt eine optimale Anbindung einer Auswurfkrümmer-Verlängerung und/oder eines Auswurfkrümmer -Gelenks und/oder einer Auswurfklappe an die Tragstruktur der erfindungsgemäßen Überladevorrichtung, wodurch ausgehend von diesen Baugruppen auf die Tragstruktur einwirkende Kräfte und Momente optimal aufgenommen werden können.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine erste perspektivische Ansicht einer erfindungsgemäßen Überladevorrichtung;
- Fig. 2: eine zweite perspektivische Ansicht der erfindungsgemäßen Überladevorrichtung;
- Fig. 3: einen Ausschnitt auf der der erfindungsgemäßen Überladevorrichtung im Bereich eines Kastenprofils derselben;
- Fig. 4: den Querschnitt IV-IV der Fig.3.

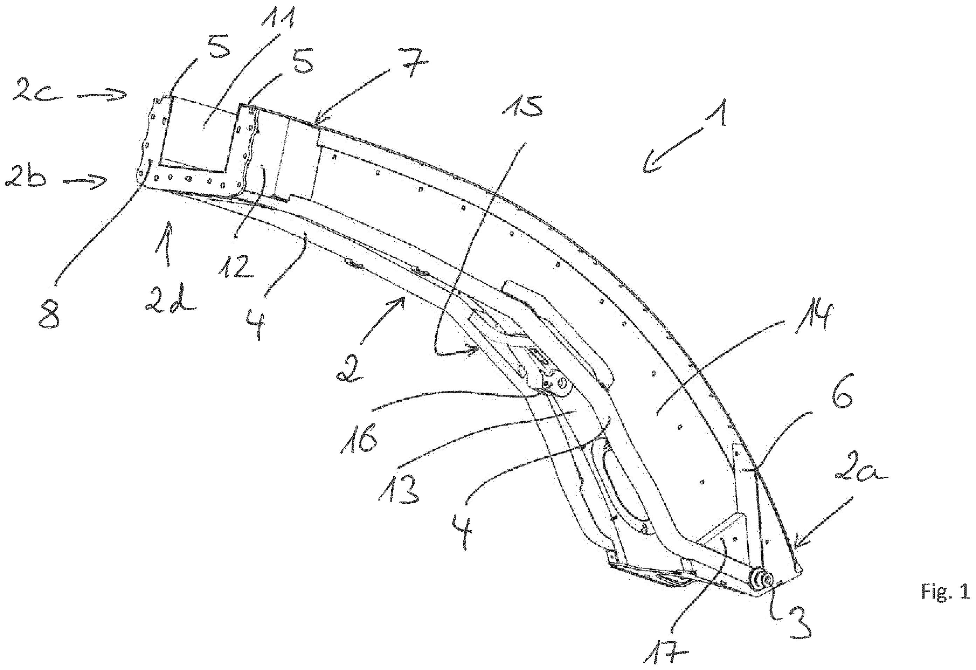

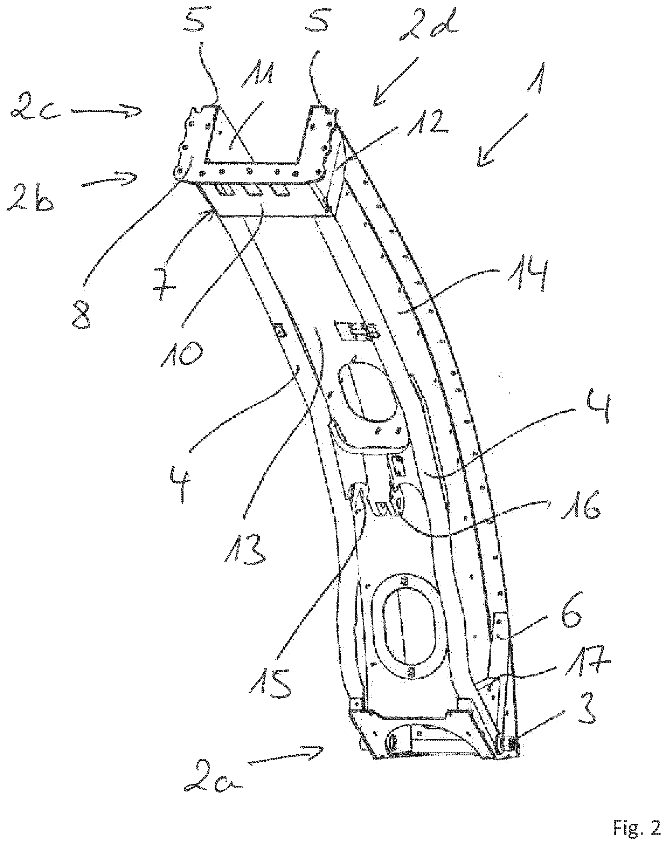

Fig. 1 und 2 zeigen unterschiedliche perspektivische Ansichten einer erfindungsgemäßen Überladevorrichtung 1 einer landwirtschaftlichen Erntemaschine. Eine Überladevorrichtung 1 wird auch als Auswurfkrümmer bezeichnet.

Die Überladevorrichtung 1 verfügt über eine Tragstruktur 2, die mit einem ersten Ende oder einem ersten Abschnitt 2a schwenkbar an einer landwirtschaftlichen Erntemaschine befestigt ist. Fig. 1, 2 zeigen im Bereich des Endes 2a ein Drehgelenk 3, um welches die an der landwirtschaftlichen Erntemaschine befestigte Überladevorrichtung 1 über die Tragstruktur 2 relativ zur landwirtschaftlichen Erntemaschine geschwenkt bzw. gekippt werden kann.

In einem an die landwirtschaftliche Erntemaschine befestigten Zustand der Überladevorrichtung 1 weist die Tragstruktur 2 an einer Unterseite 2b Profilrohre 4 und an einer Oberseite 2c Winkelschienen 5 auf. So erstrecken sich an der Unterseite 2b, ausgehend vom ersten Ende bzw. ersten Abschnitt 2a zwei Profilrohre 4 in Richtung auf ein gegenüberliegendes zweites Ende bzw. einen gegenüberliegenden zweiten Abschnitt 2d der Tragstruktur, und zwar vorzugsweise ausgehend von dem Drehgelenk 3. Entlang der Oberseite 2c erstrecken sich ausgehend vom ersten Ende bzw. ersten Abschnitt 2a in Richtung auf das gegenüberliegende zweite Ende bzw. den gegenüberliegenden zweiten Abschnitt 2d zwei Winkelschienen 5. Sowohl die Profilrohre 4 als auch die Winkelschienen 5 verfügen ausgehend vom ersten Ende bzw. ersten Abschnitt 2a in Richtung auf das zweite Ende bzw. den zweiten Abschnitt 2d über eine gekrümmte Kontur.

An dem oder benachbart zu dem ersten Ende oder ersten Abschnitt 2a sind die Profilrohre 4 mit den Winkelschienen 5 über weitere Profilrohre 6 verbunden. Die weiteren Profilrohre 6 erstrecken sich wiederum ausgehend vom Drehgelenk 3 in Richtung auf die Winkelschienen 5, nämlich am ersten Ende oder ersten Abschnitt 2a der Tragstruktur 2.

Am ersten Ende oder ersten Abschnitt 2a erstreckt sich an jeder Seite der Tragstruktur 2 zwischen jeweils einem der Profilrohre 4 und jeweils einer der Winkelschienen 5 jeweils ein weiteres Profilrohr 6.

An dem dem ersten Ende oder ersten Abschnitt 2a gegenüberliegenden zweiten Ende oder zweiten Abschnitt 2d weist die Tragstruktur 1 ein Kastenprofil 7 auf, über welches die Profilrohre 4 und die Winkelschienen 5 an dem zweiten Ende bzw. zweiten Abschnitt 2d miteinander verbunden sind.

Die Tragstruktur 2 der erfindungsgemäßen Überladevorrichtung 1 verfügt demnach über die Profilrohre 4 sowie die Winkelschienen 5, die sich ausgehend vom ersten Ende bzw. ersten Abschnitt 2a gekrümmt in Richtung auf das zweite Ende bzw. den zweiten Abschnitt 2d erstrecken, wobei im Bereich des ersten Endes bzw. ersten Abschnitts 2a jeweils ein Profilrohr 4 mit jeweils einer Winkelschiene 5 über jeweils ein weiteres Profilrohr 6 verbunden ist, und wobei im Bereich des zweiten Endes bzw. zweiten Abschnitts 2d das Kastenprofil 7 vorhanden ist, welches die Profilrohre 4 und die Winkelprofile 5 verbindet.

Das Kastenprofil 7 weist einen Flansch 8 auf, wobei der Flansch 8 vorzugsweise ausgebildet bzw. eingerichtet ist, eine nicht gezeigte Auswurfkrümmer-Verlängerung oder ein nicht gezeigtes Auswurfkrümmer-Gelenk oder eine Auswurfklappe an der Tragstruktur 2 zu befestigen.

Ein Auswurfkrümmer-Verlängerungsstück weist vorzugsweise eine Tragstruktur auf, die analog zur Überladevorrichtung aufgebaut ist. An der Unterseite sind Profilrohre vorgesehen, welche die Druckbelastung aufnehmen und an der Oberseite sind Winkelschienen vorgesehen, welche die Zugbelastungen aufnehmen. Die Profilrohre und Winkelschienen eines Auswurfkrümmer-Verlängerungsstücks werden an beiden Enden über ein Kastenprofil miteinander verbunden. Ein Kastenprofil eines Auswurfkrümmer-Verlängerungsstücks entspricht vorzugsweise im Wesentlichen dem der Überladevorrichtung und weist an beiden Kastenprofilen jeweils einen Flansch auf, über den es mit einer Überladevorrichtung, einem Auswurfkrümmer-Gelenk, einem weiteren Auswurfkrümmer-Verlängerungsstück und/oder mit einer Auswurfklappe verbunden werden kann.

Die an der Unterseite 2b der Tragstruktur 2 verlaufenden Profilrohre 4 bilden einen Druckbelastungsstrang und die an der Oberseite 2c verlaufenden Winkelschienen 5 bilden einen Zugbelastungsstrang der Tragstruktur 2, um im Betrieb auf die Überladevorrichtung 1 und damit Tragstruktur 2 wirkende Kräfte und Momente optimal aufnehmen zu können. Wie bereits ausgeführt, sind die Winkelschienen 5 und die Profilrohre 4 dabei im Bereich des ersten Endes bzw. ersten Abschnitts 2a, an welchem die Überladevorrichtung 1 bzw. Tragstruktur 2 an der landwirtschaftlichen Erntemaschine befestigt sind, über die weiteren Profilrohre 6 verbunden. Hierdurch wird im Bereich des ersten Endes bzw. ersten Abschnitts 2a der Zugstrang und der Druckstrang aneinandergekoppelt. Am gegenüberliegenden zweiten Ende bzw. gegenüberliegenden zweiten Abschnitt 2d erfolgt diese Kopplung von Zugstrang und Druckstrang über das Kastenprofil 7.

Das Kastenprofil 7 weist an der Unterseite zwei sich zwischen den Profilrohren 4 erstreckende Bodenwände 9, 10 auf. Die beiden Bodenwände 9, 10 verlaufen parallel zueinander, wobei im an die landwirtschaftliche Erntemaschine befestigten Zustand der Überladevorrichtung 1 die untere Bodenwand 10 direkt an beiden Profilrohren 4 befestigt ist.

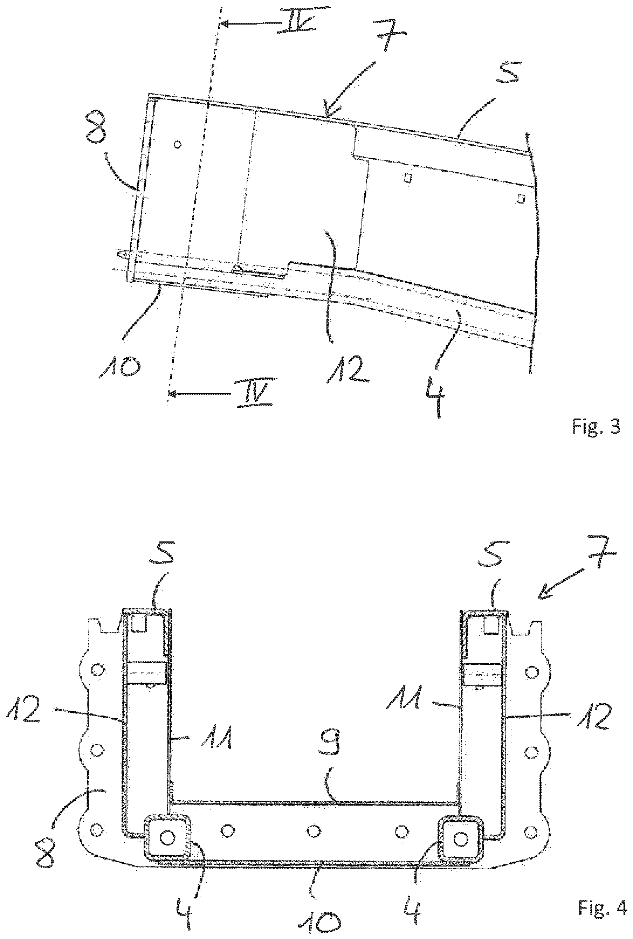

Im Bereich des Kastenprofils 7 erstrecken sich zwischen jeweils einer Winkelschiene 5 und dem an derselben Seite angeordneten Profilrohr 4 jeweils zwei Seitenwände 11, 12. Beide Seitenwände 11, 12 greifen dabei gemäß Fig. 4 sowohl an der jeweiligen Winkelschiene 5 als auch am jeweiligen Profilrohr 4 an. Die obere Bodenwand 9 greift an den inneren Seitenwänden 11 an.

Der Flansch 8 ist sowohl mit jedem der Profilrohre 4 als auch mit jeder Winkelschiene 5 durch Verschweißen fest verbunden. Ferner sind sämtliche Seitenwände 11, 12 des Kastenprofils 7 mit dem Flansch 8 verschweißt. Weitere Schweißverbindungen sind vorzugsweise zwischen dem Flansch 8 und den Bodenwänden 9, 10 ausgebildet.

Bei den Profilrohren 4 sowie den weiteren Profilrohren 6 handelt es sich vorzugsweise um Vierkantrohre.

Zwischen dem an dem zweiten Ende bzw. zweiten Abschnitt 2d ausgebildeten Kastenprofil 7 und dem ersten Ende oder ersten Abschnitt 2a der Tragstruktur 2 weist die Überladevorrichtung 1 an der Unterseite 2b eine einzige sich zwischen den Profilrohren 4 erstreckende Bodenwand 13 auf. Ferner ist in diesem Abschnitt zwischen dem Abschnitt 2a und dem Abschnitt 2b zu beiden Seiten jeweils eine einzige Seitenwand 14 vorhanden.

Die Bodenwand 13 geht dabei in die obere Bodenwand 9 des Kastenprofils 7 über, die Seitenwände 14 gehen in die inneren Seitenwände 11 des Kastenprofils 7 über.

Oben auf den Winkelschienen 5 ist ein nicht gezeigtes Verschließblech befestigt.

An diesem Verschließblech bewegt sich im Betrieb das von der Überladevorrichtung zu überladende Erntegut entlang.

Wie am besten Fig. 2 entnommen werden kann, ist mit der Tragstruktur 2 im Bereich der Unterseite 2b eine Aufnahme 15 für einen vorzugsweise hydraulischen Betätigungszylinder bzw. Betätigungskolben verbunden. Diese Aufnahme 15 erstreckt sich dabei zwischen den beiden Profilrohren 4 und ist mit den beiden Profilrohren 4 vorzugsweise durch Verschweißen verbunden. In einem mittleren Abschnitt weist die Aufnahme 15 einen Anbindungsabschnitt 16 für den Betätigungszylinder bzw. Betätigungskolben auf. Über den Betätigungszylinder bzw. Betätigungskolben kann die Tragstruktur 2 und damit die Überladevorrichtung 1 das Drehgelenk 3 geschwenkt bzw. gekippt werden.

Wie am besten Fig. 1 entnommen werden kann, sind im Bereich des ersten Endes bzw. ersten Abschnitts 2a der Überladevorrichtung 1 Stützkörper 17 vorhanden, die sich außen an die Seitenwände 14 anschließen. Jeder der beiden Stützkörper 17 ist einerseits mit dem jeweiligen Profilrohr 4 und andererseits mit dem jeweiligen weiteren Profilrohr 6 sowie vorzugsweise auch mit der jeweiligen Seitenwand 14 durch Verschweißen verbunden.

Dadurch, dass der Flansch 8 sowohl im Bereich der beiden Profilrohre 4 als auch im Bereich der beiden Winkelschienen 5 sowie der insgesamt vier Seitenwände 11, 12 und vorzugsweise auch mit beiden Bodenwänden 9, 10 des Kastenprofils 7 mit diesen Baugruppen verschweißt ist, ist jede der einzelnen Schweißnahten einer deutlich geringeren Belastung ausgesetzt. Die Zuverlässigkeit der Anbindung des Flanschs 8 wird so erhöht.

Die Erfindung betrifft weiterhin eine landwirtschaftliche Erntemaschine mit einer erfindungsgemäßen Überladevorrichtung 1. Bei der landwirtschaftlichen Erntemaschine handelt es sich vorzugsweise um einen Feldhäcksler.

Die Überladevorrichtung 1 verfügt über ein geringes Gewicht und kann im Betrieb auf dieselbe einwirkende Kräfte und Momente optimal aufnehmen.

### Bezugszeichenliste

- 1: Überladevorrichtung
- 2: Tragstruktur
- 2a: erstes Ende / erster Abschnitt
- 2b: Unterseite
- 2c: Oberseite
- 2d: zweites Ende / zweiter Abschnitt
- 3: Drehgelenk
- 4: Profilrohr
- 5: Winkelschiene
- 6: weiteres Profilrohr
- 7: Kastenprofil
- 8: Flansch
- 9: Bodenwand
- 10: Bodenwand
- 11: Seitenwand
- 12: Seitenwand
- 13: Bodenwand
- 14: Seitenwand
- 15: Aufnahme
- 16: Anbindungsabschnitt
- 17: Stützkörper

## Patentansprüche

1. Überladevorrichtung (1) einer landwirtschaftlichen Erntemaschine,
mit einer Tragstruktur (2), die mit einem ersten Ende oder ersten Abschnitt (2a) schwenkbar an der landwirtschaftlichen Erntemaschine befestigbar ist, wobei
die Tragstruktur (2) an einer Unterseite (2b) Profilrohre (4) und an einer Oberseite (2c) Schienen (5) aufweist,
die Profilrohre (4) und die Schienen (5) an dem oder benachbart zu dem ersten Ende oder ersten Abschnitt (2a) über weitere Profilrohre (6) verbunden sind, **dadurch gekennzeichnet, dass** die Schienen als Winkelschienen (5) ausgebildet sind, wobei
die Profilrohre (4) und die Winkelschienen (5) an einem dem ersten Ende oder ersten Abschnitt (2a) gegenüberliegenden zweiten Ende oder zweiten Abschnitt (2d) über ein Kastenprofil (7) verbunden sind, wobei das Kastenprofil (7) an der Unterseite (2b) sich zwischen den Profilrohren (4) erstreckende Bodenwände (9, 10) und sich zwischen jeweils einer Winkelschiene (5) und einem Profilrohr (4) ersteckende Seitenwände (11, 12) aufweist.

2. Überladevorrichtung (1) nach Anspruch 1, **dadurch gekennzeichnet, dass** die an der Unterseite (2b) verlaufenden Profilrohre (4) einen Druckbelastungsstrang und die an der Oberseite (2c) verlaufenden Winkelschienen (5) einen Zugbelastungsstrang bilden.

3. Überladevorrichtung (1) nach Anspruch 1 oder 2, **dadurch gekennzeichnet, dass** die an der Unterseite (2b) verlaufenden Profilrohre (4) und/oder die weiteren Profilrohre (6) Vierkantrohre sind.

4. Überladevorrichtung (1) nach einem der Ansprüche 1 bis 3, **dadurch gekennzeichnet, dass** das Kastenprofil (7) einen Flansch (8) aufweist, der zur Anbindung einer Auswurfkrümmer-Verlängerung und/oder eines Auswurfkrümmer-Gelenks und/oder einer Auswurfklappe ausgebildet ist.

5. Überladevorrichtung (1) nach Anspruch 1 und 4, **dadurch gekennzeichnet, dass** der Flansch (8) mit jedem der Profilrohre (4), jeder der Winkelschienen (5) und jeder der Seitenwände (11, 12) verschweißt ist.

6. Überladevorrichtung (1) nach einem der Ansprüche 1 bis 5, **dadurch gekennzeichnet, dass** zwischen dem an dem zweiten Ende oder zweiten Abschnitt (2d) ausgebildeten Kastenprofil (7) und dem ersten Ende oder ersten Abschnitt (2a) der Tragstruktur an der Unterseite (2b) eine einzige sich zwischen den Profilrohren (4) erstreckende Bodenwand (13) und jeweils eine einzige sich zwischen jeweils einer Winkelschiene (5) und einem Profilrohr (4) ersteckende Seitenwand (14) verläuft.

7. Überladevorrichtung (1) nach einem der Ansprüche 1 bis 6, **dadurch gekennzeichnet, dass** oben auf den Winkelschienen (5) ein Verschließblech befestigt ist.

8. Überladevorrichtung (1) nach einem der vorhergehenden Ansprüche, **gekennzeichnet durch** ein Auswurfkrümmer-Verlängerungsstück mit Profilrohren an der Unterseite und Winkelschienen an der Oberseite, die an beiden Enden des Auswurfkrümmer-Verlängerungsstücks über ein Kastenprofil miteinander verbunden sind und an den Kastenprofilen Flansche vorgesehen sind, über welche das Auswurfkrümmer-Verlängerungsstück mit der Überladevorrichtung (1), einem Auswurfkrümmer-Gelenk, einem weiteren Auswurfkrümmer-Verlängerungsstück und/oder mit einer Auswurfklappe verbindbar ist.

9. Landwirtschaftliche Erntemaschine, **gekennzeichnet durch** eine Überladevorrichtung (1) nach einem der Ansprüche 1 bis 8.

10. Landwirtschaftliche Erntemaschine nach Anspruch 9, **dadurch gekennzeichnet, dass** dieselbe als Feldhäcksler ausgebildet ist.

## Claims

1. Transfer device (1) of an agricultural harvester;
having a support structure (2) which by way of a first end or first portion (2a) is able to be pivotably fastened to the agricultural harvester, wherein
the support structure (2) has tubular profiles (4) on a lower side (2b) and rails (5) on an upper side (2c),
the tubular profiles (4) and the rails (5), on or adjacent to the first end or first portion (2a) are connected by way of further tubular profiles (6), **characterized in that** the rails are formed as angular rails (5), wherein the tubular profiles (4) and the angular rails (5), on a second end or second portion (2d) lying opposite the first end or first portion (2a), are connected by way of a box-section profile (7), wherein the box-section profile (7) has on the lower side (2b) base walls (9, 10) extending between the tubular profiles (4) and side walls (11, 12) extending between in each case one angular rail (5) and one tubular profile (4).

2. Transfer device (1) according to Claim 1, **characterized in that** the tubular profiles (4) running on the lower side (2b) form a compressive load strand, and the angular rails (5) running on the upper side (2c) form a tensile load strand.

3. Transfer device (1) according to Claim 1 or 2, **characterized in that** the tubular profiles (4) running on the lower side (2b) and/or the further tubular profiles (6) are square tubes.

4. Transfer device (1) according to one of Claims 1 to 3, **characterized in that** the box-section profile (7) has a flange (8) which is designed for attaching a discharge chute extension and/or a discharge chute joint and/or a discharge flap.

5. Transfer device (1) according to Claims 1 and 4, **characterized in that** the flange (8) is welded to each of the tubular profiles (4), each of the angular rails (5) and each of the side walls (11, 12).

6. Transfer device (1) according to one of Claims 1 to 5, **characterized in that** a single base wall (13) extending between the tubular profiles (4) and in each case one single side wall (14) extending between in each case one angular rail (5) and one tubular profile (4) runs on the lower side (2b) between the box-section profile (7) formed on the second end or second portion (2d) and the first end or first portion (2a) of the support structure.

7. Transfer device (1) according to one of Claims 1 to 6, **characterized in that** a closing plate is fastened to the top of the angular rails (5).

8. Transfer device (1) according to one of the preceding claims, **characterized by** a discharge chute extension piece having tubular profiles on the lower side and angular rails on the upper side, which are connected to one another by way of a box-section profile at both ends of the discharge chute extension piece and are provided on those box-section profile flanges by way of which the discharge chute extension piece is able to be connected to the transfer device (1), to a discharge chute joint, to a further discharge chute extension piece and/or to a discharge flap.

9. Agricultural harvester, **characterized by** a transfer device (1) according to one of Claims 1 to 8.

10. Agricultural harvester according to Claim 9, **characterized in that** the same is designed as a forage harvester.

## Revendications

1. Dispositif de transbordement (1) d'une machine de récolte agricole,
comprenant une structure de support (2) qui peut être fixée par une première extrémité ou une première partie (2a) de façon pivotante à la machine de récolte agricole, sachant que
la structure de support (2) présente des tubes profilés (4) sur une face inférieure (2b) et des rails (5) sur une face supérieure (2c),
les tubes profilés (4) et les rails (5) sont reliés par des tubes profilés supplémentaires (6) au niveau de la première extrémité ou de la première partie (2a) ou à proximité de celle-ci, **caractérisé en ce que** les rails sont réalisés sous forme cornières (5), sachant que
les tubes profilés (4) et les cornières (5) sont reliés par un profilé en caisson (7) au niveau d'une deuxième extrémité ou d'une deuxième partie (2d) opposée à la première extrémité ou la première partie (2a), le profilé en caisson (7) présentant, sur la face inférieure (2b), des parois de fond (9, 10) s'étendant entre les tubes profilés (4), et des parois latérales (11, 12) s'étendant respectivement entre une cornière (5) et un tube profilé (4).

2. Dispositif de transbordement (1) selon la revendication 1, **caractérisé en ce que** les tubes profilés (4) s'étendant sur la face inférieure (2b) forment une chaîne de charge de compression, et les cornières (5) s'étendant sur la face supérieure (2c) forment une chaîne de charge de traction.

3. Dispositif de transbordement (1) selon la revendication 1 ou 2, **caractérisé en ce que** les tubes profilés (4) s'étendant sur la face inférieure (2b) et/ou les tubes profilés supplémentaires (6) sont des tubes carrés.

4. Dispositif de transbordement (1) selon une des revendications 1 à 3, **caractérisé en ce que** le profilé en caisson (7) présente une bride (8) qui est agencée en vue de la fixation d'un prolongement de goulotte et/ou d'une articulation de goulotte et/ou d'une casquette de goulotte.

5. Dispositif de transbordement (1) selon la revendication 1 et 4, **caractérisé en ce que** la bride (8) est soudée à chacun des tubes profilés (4), à chacune des cornières (5) et à chacune des parois latérales (11, 12).

6. Dispositif de transbordement (1) selon une des revendications 1 à 5, **caractérisé en ce qu'**une paroi de fond (13) unique, s'étendant entre les tubes profilés (4), et respectivement une paroi latérale (14) unique, s'étendant respectivement entre une cornière (5) et un tube profilé (4), s'étendent sur la face inférieure (2b), entre le profilé en caisson (7), formé sur la deuxième extrémité ou la deuxième partie (2d), et la première extrémité ou la première partie (2a) de la structure de support.

7. Dispositif de transbordement (1) selon une des revendications 1 à 6, **caractérisé en ce qu'**une tôle de fermeture est fixée en haut sur les cornières (5).

8. Dispositif de transbordement (1) selon une des revendications précédentes, **caractérisé en ce qu'**il comporte une pièce de rallonge de goulotte avec des tubes profilés sur la face inférieure et des cornières sur la face supérieure, qui sont reliés entre eux par un profilé en caisson aux deux extrémités de la pièce de rallonge de goulotte, et que des brides sont prévues sur les profilés en caisson, qui permettent de relier la pièce de rallonge de goulotte au dispositif de transbordement (1), à une articulation de goulotte, une autre pièce de rallonge de goulotte et/ou une casquette de goulotte.

9. Machine de récolte agricole, **caractérisée en ce qu'**elle comporte un dispositif de transbordement (1) selon une des revendications 1 à 8.

10. Machine de récolte agricole selon la revendication 9, **caractérisée en ce que** celle-ci est réalisée sous forme de récolteuse-ramasseuse-hacheuse.
